# EUROPEAN PATENT APPLICATION

(11) **EP 4 830 960 A1**
(43) Date of publication of application: **28.10.2026**
(21) Application number: 24926547.1
(22) Date of filing: 17.04.2024
(51) Int. Cl.: B60K 1/04

(54) **QUICK-CHANGE LOCK ASSEMBLY, BATTERY, AND VEHICLE**

(30) Priority: 26.02.2024 CN 202420350149 U
(71) Applicant: Contemporary Amperex Technology Co., Limited, Ningde, Fujian 352100 (CN)
(72) Inventor: WU, Kai, Ningde, Fujian 352100 (CN); CHAN, Libing, Ningde, Fujian 352100 (CN)
(74) Representative: Lorenz Seidler Gossel Part. mbB
(86) International application number: PCT/CN2024/088335
(87) International publication number: WO 2025/179675

(57) **Abstract**

A quick-change lock assembly (400), a battery (100), and a vehicle (1000), which relate to the technical field of quick-change lock structures. The quick-change lock assembly (400) comprises a lock sleeve (410), a rotating member (420), a locking member (430) and an anti-rotation assembly (440), wherein the anti-rotation assembly (440) is configured to lock a rotating section (422) so as to limit the rotation of a first threaded section (421), such that a second threaded section (431) and a connection section (432) are kept in a state in which the second threaded section (431) and the connection section (432) are locked to a lock seat, or the anti-rotation assembly (440) is configured to unlock the rotating section (422), such that the first threaded section (421) can rotate relative to the second threaded section (431), and the second threaded section (431) and the connection section (432) can move to the outside of a cavity (411) in an axial direction so as to be unlocked from the lock seat. The quick-change lock assembly (400) maintains a more stable locking state when a vibration occurs.

## Description

The present application refers to Chinese Patent Application No. 202420350149.1, filed on February 26, 2024 and entitled "QUICK-CHANGE LOCK ASSEMBLY, BATTERY, AND VEHICLE", which is incorporated herein by reference in its entirety.

### TECHNICAL FIELD

The present application relates to the technical field of quick-change lock structures, and particularly provides a quick-change lock assembly, a battery, and a vehicle.

### BACKGROUND

A quick-change lock is used to lock a battery onto a vehicle body of a vehicle. In the related art, the quick-change lock achieves the purpose of quick-change locking and unlocking through a tightening screw and a locking screw that are arranged in a lock sleeve and are threadedly engaged with each other. The rotational movement of the locking screw in the lock sleeve is restricted, and by rotating the tightening screw, the locking screw is made to move axially to achieve raising and lowering, so that the portion of the locking screw located outside the lock sleeve can be lowered to achieve clamping and fixing, or raised to achieve unlocking and disassembly.

However, in the related art, during long-term use of the quick-change lock, there is a phenomenon that the tightening screw rotates and loosens due to vibration, thereby resulting in poor stability of the quick-change lock.

### SUMMARY

The purpose of the embodiments of the present application is to provide a quick-change lock assembly, a battery, and a vehicle, aiming to solve the problem of poor stability of the quick-change lock in the related art due to loosening of the quick-change lock caused by vibration.

To achieve the above purpose, the technical solution adopted by the embodiments of the present application is:
According to a first aspect, an embodiment of the present application provides a quick-change lock assembly, configured to be locked onto a lock base. The quick-change lock assembly includes a lock sleeve, a rotary knob member, a locking member, and an anti-rotation assembly. A hollow cavity is formed inside the lock sleeve, and the cavity has an axial direction. The rotary knob member includes a first threaded section and a rotary knob section formed along the axial direction, where the first threaded section is disposed in the cavity, and the first threaded section is configured to be rotatable about the axis. The locking member includes a connecting section and a second threaded section formed along the axial direction, where the connecting section extends out of the cavity and is used for locking engagement with the lock base, the second threaded section is limitedly disposed in the cavity and threadedly engaged with the first threaded section, and the second threaded section is configured to be movable along the axial direction. The anti-rotation assembly is configured to be locked to the rotary knob section to restrict rotation of the first threaded section, so as to maintain the second threaded section and the connecting section in a state locked onto the lock base; or, the anti-rotation assembly is configured to release the locking of the rotary knob section, so that the first threaded section is capable of rotating relative to the second threaded section, and the second threaded section and the connecting section are capable of moving axially outward from the cavity to release the locking of the lock base.

The beneficial effects of the embodiments of the present application: In the quick-change lock assembly provided by the embodiments of the present application, by performing a rotary operation on the rotary knob section of the rotary knob member, the first threaded section can rotate relative to the second threaded section of the locking member, and thus the second threaded section and the connecting section can move along the axial direction to achieve locking onto or unlocking from the lock base. In addition, by providing the anti-rotation assembly, the anti-rotation assembly can be locked onto the rotary knob section to restrict relative rotation between the first threaded section and the second threaded section, so that even in the case of vibration, the rotary knob section does not rotate due to vibration, and thus the probability of axial movement of the second threaded section and the connecting section is also lower, and the locked state of the quick-change lock assembly is more stable.

In some embodiments, the anti-rotation assembly includes a first anti-rotation structure, where the first anti-rotation structure is disposed on the rotary knob section and is configured to restrict relative rotation with the rotary knob section, a first locking portion is formed along an outer peripheral side surface of the first anti-rotation structure, a second locking portion is formed along an inner wall surface of the lock sleeve, the first locking portion and the second locking portion are engaged in a circumferential direction, and the first anti-rotation structure is capable of moving along the axial direction to disengage the first locking portion from the second locking portion.

By adopting the above technical solution, the first locking portion formed on the outer peripheral side surface of the first anti-rotation structure is engaged with the second locking portion formed on the inner wall surface of the lock sleeve in the circumferential direction, so that the first anti-rotation structure cannot rotate about the axis relative to the lock sleeve. Moreover, since relative rotation between the first anti-rotation structure and the rotary knob section is also restricted, the rotary knob section is locked and cannot rotate about the axis when the first locking portion and the second locking portion are engaged. In addition, the first anti-rotation structure is capable of moving along the axial direction to disengage the first locking portion from the second locking portion, thereby enabling continued operation of the rotary knob section to cause relative rotation between the first threaded section and the second threaded section, and further enabling the connecting section to move along the axial direction and achieve the purpose of locking or unlocking.

In some embodiments, the anti-rotation assembly includes a first anti-rotation structure and a second anti-rotation structure, where the first anti-rotation structure is disposed on the rotary knob section and is configured to restrict relative rotation with the rotary knob section, the second anti-rotation structure is connected to the lock sleeve, a first locking portion is formed on the outer peripheral side surface of the first anti-rotation structure, a through hole for the rotary knob section to penetrate through is provided on the second anti-rotation structure, a third locking portion is formed on an inner wall of the through hole, the first locking portion and the third locking portion are engaged in the circumferential direction, and the first anti-rotation structure is capable of moving along the axial direction to disengage the third locking portion from the first locking portion.

By adopting the above technical solution, the first locking portion formed on the outer peripheral side surface of the first anti-rotation structure is engaged with the third locking portion formed on the inner wall surface of the second anti-rotation structure in the circumferential direction, so that the first anti-rotation structure cannot rotate about the axis relative to the second anti-rotation structure. Moreover, since relative rotation between the first anti-rotation structure and the rotary knob section is also restricted, the rotary knob section is locked and cannot rotate about the axis when the first locking portion and the third locking portion are engaged. In addition, the first anti-rotation structure is capable of moving along the axial direction to disengage the first locking portion from the third locking portion, thereby enabling continued operation of the rotary knob section to cause relative rotation between the first threaded section and the second threaded section, and further enabling the connecting section to move along the axial direction and achieve the purpose of locking or unlocking.

In some embodiments, a protrusion portion is also formed on the inner wall of the through hole, the protrusion portion is disposed on a side of the third locking portion facing away from the first threaded section, and the protrusion portion is configured to restrict the movement of the first locking portion along the axial direction.

By adopting the above technical solution, the protrusion portion can be used to limit the movement of the first locking portion along the axial direction, thereby restricting the movement of the first anti-rotation structure between the first threaded section and the protrusion portion, reducing the probability of falling off due to excessive movement.

In some embodiments, the quick-change lock assembly further includes an elastic reset member, where two opposite ends of the elastic reset member respectively abut against the first threaded section and the first anti-rotation structure.

By adopting the above technical solution, when the first anti-rotation structure has a tendency to move toward the first threaded section and disengage from the second anti-rotation structure due to vibration or other conditions, the elastic reset member can apply a force to the first anti-rotation structure to reduce the probability of accidental disengagement of the first anti-rotation structure from the second anti-rotation structure, maintaining the engagement state of the first locking portion and the third locking portion, thereby improving the stability of the quick-change lock assembly.

In some embodiments, a boss portion is formed on one side of the first anti-rotation structure in the axial direction, the protrusion portion is in an annular structure, and the boss portion penetrates through the protrusion portion and extends outside of the lock sleeve.

By adopting the above technical solution, by penetrating the boss portion through the protrusion portion and extending outside of the lock sleeve, when an unlocking operation is required, the boss portion extending to the outside can be more easily operated, and the boss portion is pushed into the lock sleeve to move the first anti-rotation structure toward the direction of the first threaded section, thereby disengaging the first locking portion of the first anti-rotation structure from the third locking portion of the second anti-rotation structure to achieve the purpose of unlocking.

In some embodiments, the second anti-rotation structure is fixed to an end of the lock sleeve where the rotary knob section is located, in the locked state of the first locking portion and the third locking portion, the boss portion extends outside the second anti-rotation structure and forms an unlocking section, and in the axial direction, the height of the unlocking section is greater than or equal to the height of the overlap of the first locking portion and the third locking portion in the locked state.

By adopting the above technical solution, the height of the unlocking section is set to be greater than or equal to the height of the overlap of the first locking portion and the third locking portion in the locked state, thus during unlocking of the first locking portion from the third locking portion, it is only necessary to push the unlocking section outside the second anti-rotation structure toward the inside of the lock sleeve until an end of the unlocking section is pushed flush with an end of the second anti-rotation structure to achieve disengagement and unlocking of the first locking portion from the third locking portion, without pushing the unlocking section into the second anti-rotation structure, effectively improving the convenience of the unlocking operation.

In some embodiments, the boss portion and the protrusion portion are in sliding engagement.

By adopting the above technical solution, by setting the boss portion and the protrusion portion in sliding engagement, during the pushing and unlocking process of the unlocking section of the first anti-rotation structure, the boss portion can slide relative to the inner wall surface of the protrusion portion, thereby making the pushing operation of the unlocking section easier.

In some embodiments, the first locking portion and the third locking portion are both gear structures, the gear of the first locking portion forms a chamfer at an outer edge facing the third locking portion, and/or, the gear of the third locking portion forms a chamfer at an outer edge facing the first locking portion.

By adopting the above technical solution, by providing a chamfer on the gear of the first locking portion, and/or, providing a chamfer on the gear of the third locking portion, when the first locking portion is disengaged from the third locking portion, the process of re-engagement between the first locking portion and the third locking portion is easier, thereby making the locking and unlocking operations of the quick-change lock assembly smoother.

In some embodiments, a fourth locking portion is formed on an outer peripheral side surface of the rotary knob section, the first anti-rotation structure is provided with a mounting hole, a fifth locking portion is formed on the inner side wall surface of the mounting hole, the fourth locking portion and the fifth locking portion are engaged in the circumferential direction, and the fourth locking portion and the fifth locking portion are in sliding engagement in the axial direction.

By adopting the above technical solution, the rotary knob section forms an engagement with the fifth locking portion formed in the mounting hole of the first anti-rotation structure through the fourth locking portion, thereby achieving restriction of relative rotation between the first anti-rotation structure and the rotary knob section, and at the same time, only by moving the first anti-rotation structure relative to the rotary knob section along the axial direction and disengaging the fourth locking portion from the fifth locking portion, free rotation of the rotary knob section relative to the first anti-rotation structure can be achieved.

According to a second aspect, an embodiment of the present application provides a battery, including a box and the quick-change lock assembly as described above, where the quick-change lock assembly is arranged on the box, and the quick-change lock assembly is configured to mount the box to a vehicle.

The beneficial effects of the embodiments of the present application: The battery provided by the embodiments of the present application includes the quick-change lock assembly as described above. On the basis that the locked state of the quick-change lock assembly as described above is more stable, the stability of the battery during fixed assembly is better.

According to a third aspect, an embodiment of the present application provides a vehicle, including a vehicle body, a battery, and the quick-change lock assembly as described above, where the quick-change lock assembly is configured to lock the battery onto the vehicle body.

The beneficial effects of the embodiments of the present application: The vehicle provided by the embodiments of the present application includes the quick-change lock assembly as described above. On the basis that the locked state of the quick-change lock assembly as described above is more stable, the stability of the battery fixed to the vehicle body through the quick-change lock assembly is better.

### BRIEF DESCRIPTION OF DRAWINGS

To describe the technical solutions in the embodiments of the present application more clearly, the following briefly describes the accompanying drawings required for describing the embodiments and the related art. Apparently, the accompanying drawings in the following description show only some embodiments of the present application, and persons of ordinary skill in the art may still derive other drawings from these accompanying drawings without creative efforts.
FIG. 1 is a schematic structural diagram of a vehicle according to some embodiments of the present application;
FIG. 2 is an exploded view of a battery according to some embodiments of the present application;
FIG. 3 is a schematic structural diagram of a quick-change lock assembly according to an embodiment of the present application;
FIG. 4 is a cross-sectional view of the quick-change lock assembly according to an embodiment of the present application;
FIG. 5 is a locally enlarged schematic diagram at A in FIG. 4;
FIG. 6 is an exploded view of the quick-change lock assembly according to an embodiment of the present application;
FIG. 7 is a schematic structural diagram of a first anti-rotation structure according to an embodiment of the present application; and
FIG. 8 is a schematic structural diagram of a second anti-rotation structure according to an embodiment of the present application.

Reference signs are described as follows:
1000. vehicle;
100. battery; 200. controller; 300. motor;
10. box; 11. first portion; 12. second portion; 20. battery cell;
400. quick-change lock assembly;
410. lock sleeve; 411. cavity;
420. rotary knob member; 421. first threaded section; 422. rotary knob section; 4221. fourth locking portion;
430. locking member; 431. second threaded section; 432. connecting section;
440. anti-rotation assembly; 441. first anti-rotation structure; 4411. first locking portion; 4412. boss portion; 44121. unlocking section; 4413. mounting hole; 4414. fifth locking portion; 442. second anti-rotation structure; 4421. through hole; 4422. third locking portion; 4423. protrusion portion;
450. elastic reset member; and
Z. axial direction.

### DESCRIPTION OF EMBODIMENTS

The embodiments of the present application are described in detail below. Examples of the embodiments are shown in the accompanying drawings, and reference signs that are the same or similar always indicate the same or similar elements or elements with the same or similar functions. The embodiments described below with reference to the drawings are illustrative and intended to explain the present application. They should not be construed as limitations on the present application.

Unless otherwise defined, meanings of all technical and scientific terms used in this specification are the same as those commonly understood by persons skilled in the art of the present application. The terms used in this specification of the present application are merely intended to describe specific embodiments, but not to limit the present application. The terms "include", "comprise", and any variations thereof in the specification and claims of the present application as well as the foregoing description of drawings are intended to cover non-exclusive inclusions.

In the description of the embodiments of the present application, the orientations or positional relationships indicated by the technical terms "length", "width", "thickness", "inside", "outside", "upper", "lower", "left", "right", and the like are based on the orientations or positional relationships as shown in the accompanying drawings. These terms are merely for ease and brevity of the description of the present application rather than indicating or implying that the means or components mentioned must have specific orientations, or must be constructed or manipulated according to specific orientations, and therefore shall not be construed as any limitations on the present application.

The terms "first", "second", and the like are merely for the purpose of distinguishing descriptions, and shall not be understood as any indication or implication of relative importance or any implicit indication of the number of technical features indicated. For example, a first guide member and a second guide member are merely intended to distinguish different guide members rather than to limit an order thereof, and the first guide member may also be named the second guide member and the second guide member may also be named the first guide member without departing from the scope of various described embodiments. In addition, the terms "first", "second", and the like do not limit that the indicated features are necessarily different either.

In the description of the embodiments of the present application, unless otherwise specified and defined explicitly, the terms "connection", "join", and the like should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the present application as suitable to specific situations. "A plurality of" means at least two, that is, two or more.

In the present application, "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

It should be noted that in the present application, the words "in some embodiments", "in an example", "for example", and the like are used to indicate making an example, example illustration, or explanation. Any embodiment or design solution described as "in some embodiments", "in an example", or "for example" in the present application shall not be interpreted as being preferable or superior to other embodiments or design solutions. In this specification, the words "in some embodiments", "in an example", "for example", and the like are intended to present relevant concepts in a specific manner, meaning that specific features, structures or characteristics described with reference to the embodiment may be incorporated in at least one embodiment of the present application. The foregoing words appearing in various places in the specification do not necessarily refer to the same embodiment or an independent or alternative embodiment that is exclusive of other embodiments. It is explicitly or implicitly understood by persons skilled in the art the embodiments described herein may be combined with other embodiments.

To make the objectives, technical solutions, and advantages of the present application more comprehensible, the following describes the present application in detail with reference to the embodiments and accompanying drawings.

Currently, from the perspective of market development, application of traction batteries is being more extensive. Traction batteries have been not only used in energy storage power supply systems such as hydroelectric power plants, heat power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also expanding.

When applied to a vehicle such as an electric vehicle, in order to improve the replacement efficiency of a battery, a quick-change lock is generally used to lock the battery onto the vehicle body. In the related art, the quick-change lock achieves the purpose of quick-change locking and unlocking through a tightening screw and a locking screw that are arranged in a lock sleeve and are threadedly engaged with each other. The rotational movement of the locking screw in the lock sleeve is restricted, and by rotating the tightening screw, the locking screw is made to move axially to achieve raising and lowering, so that the portion of the locking screw located outside the lock sleeve can be lowered to achieve clamping and locking fixation onto a lock base portion of a vehicle body, or raised to disengage from the lock base and achieve the purpose of unlocking and disassembly. However, during long-term use of the quick-change lock, there is a linear that the tightening screw rotates and loosens due to vibration of the tightening screw caused by the vibration of the vehicle, thereby causing the locking screw to move and affecting the locking effect of the quick-change lock. Therefore, the quick-change lock exhibits poor stability.

Based on the above considerations, in order to solve the problem of poor stability of the quick-change lock in the related art due to loosening of the quick-change lock caused by vibration, a quick-change lock assembly is designed, which uses the anti-rotation assembly to be locked onto the rotary knob section to restrict rotation of the first threaded section, thereby effectively reducing the probability of rotation of the rotary knob section and the first threaded section in the case of vibration, so as to maintain the second threaded section and the connecting section in a state locked onto the lock base. In addition, only by releasing the locking of the anti-rotation assembly onto the rotary knob section, the rotary knob section can be subjected to a rotary operation to move the second threaded section and the connecting section axially outward from the cavity to release the locking of the lock base.

The quick-change lock assembly disclosed in the embodiments of the present application can be used for quick-change disassembly and assembly operations of part structures. For ease of description, the quick-change lock assembly of an embodiment of the present application used to lock the battery onto the vehicle body is used as an example for description of the following embodiments.

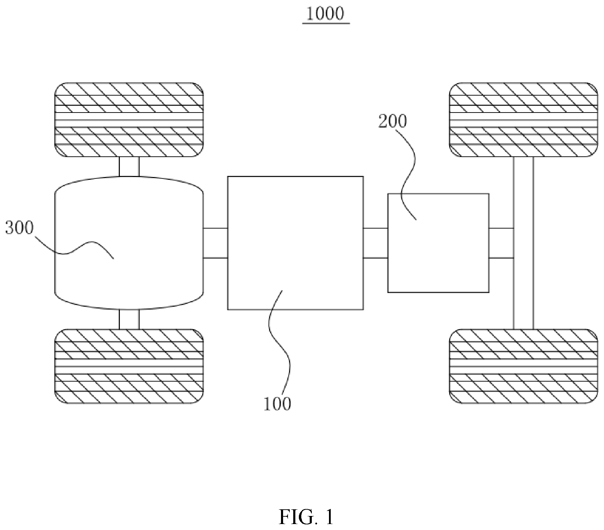

Referring to FIG. 1, FIG. 1 is a schematic structural diagram of a vehicle 1000 according to some embodiments of the present application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, where the battery 100 may be disposed at the bottom, front or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of the present application, the battery 100 can be used as not only the operational power source for the vehicle 1000 but also a driving power source for the vehicle 1000, replacing or partially replacing fossil fuel or natural gas to provide driving traction for the vehicle 1000.

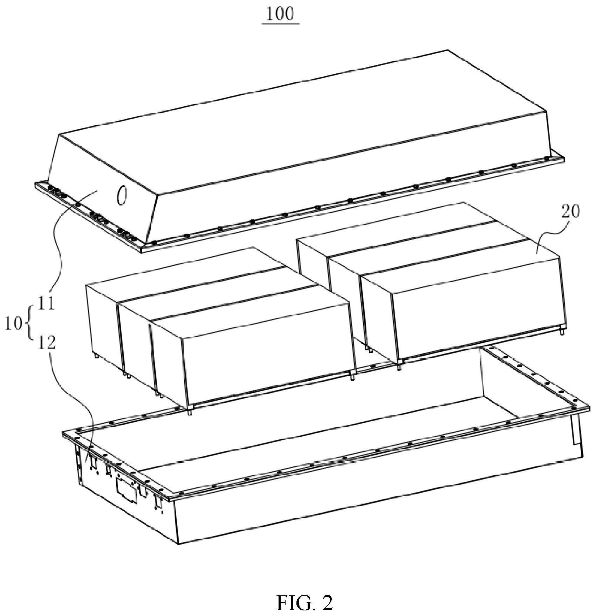

Referring to FIG. 2, FIG. 2 is an exploded view of a battery 100 according to some embodiments of the present application. The battery 100 includes a box 10 and a battery cell 20, the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together such that the first portion 11 and the second portion 12 jointly define a space for accommodating the battery cell 20. The second portion 12 may be a hollow structure with one end open, and the first portion 11 may be a plate structure. The first portion 11 covers an open side of the second portion 12, so that the first portion 11 and the second portion 12 jointly define an accommodating space. Alternatively, the first portion 11 and the second portion 12 may each be a hollow structure with one side open, and the open side of the first portion 11 covers the open side of the second portion 12. Certainly, the box 10 formed by the first portion 11 and the second portion 12 may be of a variety of shapes, for example, cylinder or cuboid.

In the battery 100, the battery cell 20 may be provided in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10. Certainly, the battery 100 may alternatively be formed in a manner that a plurality of battery cells 20 are connected in series, parallel, or series-parallel first to form a battery module and then a plurality of battery modules are connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, or may be a lithium-sulfur battery, a sodium-ion battery, or a magnesium-ion battery, without being limited thereto. The battery cell 20 may be cylindrical, flat, cuboid, or of other shapes.

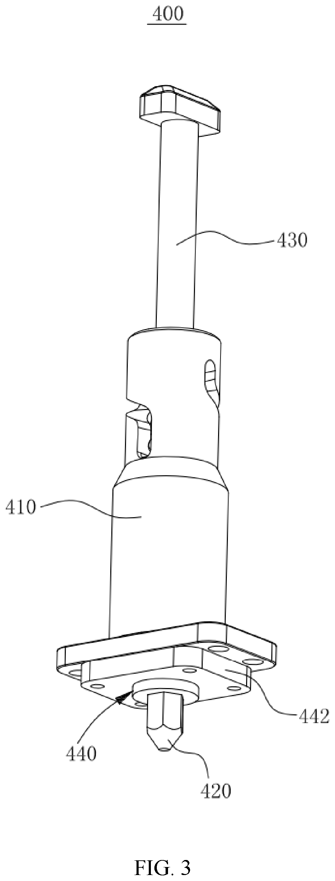

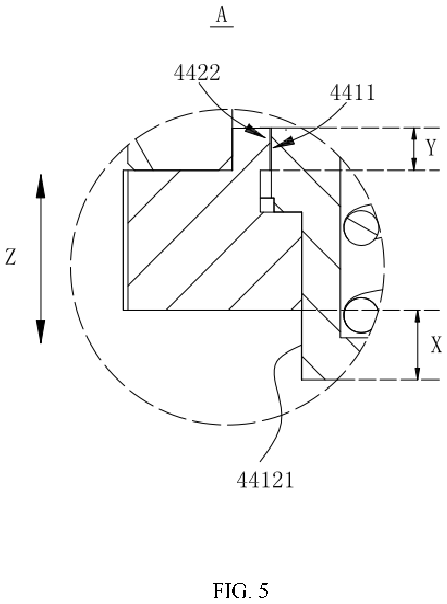

According to some embodiments of the present application, referring to FIG. 3 to FIG. 5, an embodiment of the present application provides a quick-change lock assembly 400, configured to be locked onto a lock base (not shown in the figure). The quick-change lock assembly 400 includes a lock sleeve 410, a rotary knob member 420, a locking member 430, and an anti-rotation assembly 440. A hollow cavity 411 is formed inside the lock sleeve 410, and the cavity 411 has an axial direction Z. The rotary knob member 420 includes a first threaded section 421 and a rotary knob section 422 formed along the axial direction Z, where the first threaded section 421 is disposed in the cavity 411, and the first threaded section 421 is configured to be rotatable about the axis. The locking member 430 includes a connecting section 432 and a second threaded section 431 formed along the axial direction Z, where the connecting section 432 extends out of the cavity 411 and is used for locking engagement with the lock base, the second threaded section 431 is limitedly disposed in the cavity 411 and threadedly engaged with the first threaded section 421, and the second threaded section 431 is configured to be movable along the axial direction Z. The anti-rotation assembly 440 is configured to be locked onto the rotary knob section 422 to restrict rotation of the first threaded section 421, so as to maintain the second threaded section 431 and the connecting section 432 in a state locked onto the lock base; or, the anti-rotation assembly 440 is configured to release the locking of the rotary knob section 422, so that the first threaded section 421 is capable of rotating relative to the second threaded section 431, and the second threaded section 431 and the connecting section 432 are capable of moving axially outward from the cavity 411 to release the locking of the lock base.

The lock sleeve 410 may be but is not limited to a columnar structure, a block structure, a spherical structure, or the like. A hollow cavity 411 is formed inside the lock sleeve 410, and thus the first threaded section 421 of the rotary knob member 420 and the second threaded section 431 of the locking member 430 can achieve connection in the cavity 411.

The axial direction Z of the cavity 411 refers to a direction from one end of the cavity communicating to the outside of the lock sleeve to the other end. In an example, the cavity may be in a columnar structure, and an axial direction of the columnar structure is the axial direction Z of the cavity 411.

The rotary knob member 420 is configured to be operated by a user to achieve the locking and unlocking functions of the quick-change lock assembly 400. The rotary knob member 420 includes a first threaded section 421 and a rotary knob section 422 formed along the axial direction Z.

The first threaded section 421 is configured to threadedly engage with the second threaded section 431 of the locking member 430. Optionally, the first threaded section 421 may be a columnar structure with external threads; or, the first threaded section 421 may also be a cylindrical structure with a threaded hole. It can be understood that the first threaded section 421 may be completely accommodated in the cavity 411 to facilitate connection with the locking member 430; or, the first threaded section 421 may also be partially exposed from the lock sleeve 410.

The rotary knob section 422 is configured to specifically perform a rotary operation, so that when the rotary operation is performed on the rotary knob section 422, the first threaded section 421 can rotate synchronously. The rotary knob section 422 may be partially inserted into the cavity 411 and connected to the first threaded section 421, and partially extend out of the lock sleeve 410; or, the rotary knob section 422 may be completely accommodated in the cavity 411; or, the rotary knob section 422 may also be completely located outside the lock sleeve 410 to facilitate user operation.

Optionally, the rotary knob section 422 may be a cylindrical rod structure, a prismatic rod structure, a spherical structure, a truncated cone structure, a pyramidal frustum structure, or the like; the rotary knob section 422 may be coaxially disposed with the first threaded section 421, so that operating the rotary knob section 422 to rotate about the axial direction Z achieves synchronous rotation of the first threaded section 421 about the axis; or, the rotary knob section 422 may also be eccentrically connected to the first threaded section 421, so that the rotary knob section 422 can be operated to rotate about the axis of the first threaded section 421, also achieving rotation of the first threaded section 421 about the axis.

The locking member 430 is configured to move along the axial direction Z under the rotational operation of the rotary knob member 420 to achieve locking or unlocking, where the locking member 430 includes a connecting section 432 and a second threaded section 431 formed along the axial direction Z.

The second threaded section 431 is configured to threadedly engage with the first threaded section 421. Optionally, the second threaded section 431 may be a columnar structure with external threads, and the first threaded section 421 correspondingly is a cylindrical structure with a threaded hole; or, the second threaded section 431 may be a cylindrical structure with a threaded hole, and the first threaded section 421 correspondingly is a columnar structure with external threads. It can be understood that the second threaded section 431 may be completely accommodated in the cavity 411 to facilitate threaded connection with the first threaded section 421; or, the second threaded section 431 may also be partially exposed from the lock sleeve 410.

The second threaded section 431 is limitedly disposed in the cavity 411 and can move along the axial direction Z. Optionally, a limiting structure (such as a limiting protrusion, a limiting boss, or the like) may be arranged on the portion of the connecting section 432 located in the cavity 411, and a limiting slot hole (such as a limiting slot provided on an inner side wall surface of the lock sleeve 410, or a limiting through hole provided on the lock sleeve 410) is provided on the lock sleeve 410 to limit the rotation of the limiting structure through the limiting slot hole; and the limiting structure is correspondingly inserted into the limiting slot hole, and when the first threaded section 421 rotates, the rotation of the second threaded section 431 is restricted, so that the second threaded section 431 can only move along the axial direction Z.

The connecting section 432 is configured to specifically perform the operation of locking onto the lock base. The connecting section 432 may extend into the cavity 411 and be fixedly connected to the second threaded section 431, and the connecting section 432 also extends out of the cavity 411 and is used for locking engagement with the lock base. Optionally, the connecting section 432 may include a T-shaped rod, and the protruding head portion of the T-shaped rod is used to lock onto the lock base; or, the connecting section 432 may include a connecting rod and a locking portion fixed to the connecting rod, where the locking portion can apply a force to the lock base and perform locking.

It can be understood that the lock base refers to the portion configured to receive the force of the connecting section 432 to achieve locking. In an example, in some implementations, when the quick-change lock assembly 400 is configured to lock the battery onto the vehicle, the lock sleeve 410 of the quick-change lock assembly 400 can be abutted against the battery, so that the battery is abutted against the lock base of the vehicle, and at the same time, the connecting section 432 is penetrated through the battery and the lock base, and the rotary knob member 420 is operated to rotate relative to the locking member 430 to move the locking member 430 along the axial direction Z, thereby moving the connecting section 432 toward the inside of the lock sleeve 410, and thus an end of the connecting section 432 can abut against the lock base and apply a force toward the direction of the lock sleeve 410 to the lock base. Therefore, the battery and the lock base are clamped and locked by the forces of the lock sleeve 410 and the connecting section 432.

The anti-rotation assembly 440 is configured to be locked onto the rotary knob section 422 to restrict its rotation, thereby restricting the rotation of the connected first threaded section 421, so that even under the influence of the received vibration, the probability of rotation of the first threaded section 421 is also low; or, the anti-rotation assembly 440 is configured to unlock the rotary knob section 422, so that the rotary knob section 422 can be operated to unlock the locking member 430 from the lock base.

Optionally, the anti-rotation assembly 440 may achieve restriction of rotation of the rotary knob section 422 by locking the rotary knob section 422 onto the lock sleeve 410; or, the anti-rotation assembly 440 may be connected to the rotary knob section 422, and achieve restriction of rotation of the rotary knob section 422 through interference between the anti-rotation assembly 440 and the lock sleeve 410. For example, the anti-rotation assembly 440 may be a locking structure (such as a locking rod, a locking block, a locking piece, or the like.) penetrating through the lock sleeve 410 and the rotary knob section 422, and only by removing the locking structure, the rotary operation of the rotary knob section 422 may continue; or, the anti-rotation assembly 440 may also be a locking sleeve sleeved on the rotary knob section 422 and restricting relative rotation with the rotary knob section 422, interference is formed between an outer surface of the locking sleeve and the lock sleeve 410, so that the locking sleeve cannot rotate relative to the lock sleeve 410, thus the rotary knob section 422 cannot rotate relative to the lock sleeve 410, and only by removing the locking sleeve, the rotary knob operation of the rotary knob section 422 may continue.

The quick-change lock assembly 400 provided by the embodiments of the present application, by performing a rotary operation on the rotary knob section 422 of the rotary knob member 420, the first threaded section 421 can rotate relative to the second threaded section 431 of the locking member 430, and thus the second threaded section 431 and the connecting section 432 can move along the axial direction Z to achieve locking onto or unlocking from the lock base. In addition, by providing the anti-rotation assembly 440, the anti-rotation assembly 440 can be locked onto the rotary knob section 422 to restrict relative rotation between the first threaded section 421 and the second threaded section 431, so that even in the case of vibration, the rotary knob section 422 does not rotate due to vibration, and thus the probability of axial movement of the second threaded section 431 and the connecting section 432 is also lower, and the locked state of the quick-change lock assembly 400 is more stable.

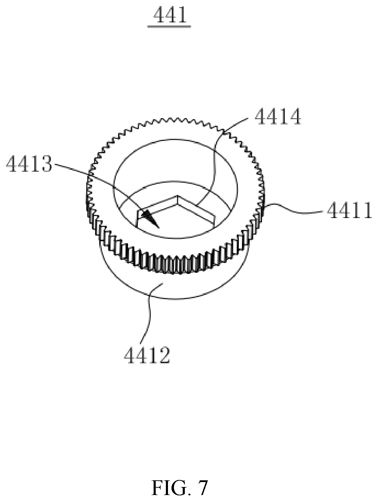

Referring to FIG. 3, FIG. 4, FIG. 6, and FIG. 7, in some embodiments, the anti-rotation assembly 440 includes a first anti-rotation structure 441, where the first anti-rotation structure 441 is disposed on the rotary knob section 422 and is configured to restrict relative rotation with the rotary knob section 422, a first locking portion 4411 is formed on an outer peripheral side surface of the first anti-rotation structure 441, a second locking portion (not shown in the figure) is formed on an inner wall surface of the lock sleeve 410, the first locking portion 4411 and the second locking portion are engaged in a circumferential direction, and the first anti-rotation structure 441 is capable of moving along the axial direction Z to disengage the first locking portion 4411 from the second locking portion.

The first anti-rotation structure 441 is configured to restrict relative rotation with the rotary knob section 422, and the first anti-rotation structure 441 is capable of moving along the axial direction Z. Optionally, the first anti-rotation structure 441 includes but is not limited to a sleeve structure, a circular ring structure, an arc segment structure, or the like, and the first anti-rotation structure 441 can only move along the axial direction Z and cannot rotate relatively. In an example, a locking structure may be disposed on an inner side wall surface of the first anti-rotation structure 441, a corresponding engaging structure may be disposed on the surface of the rotary knob section 422, and restriction of rotation is achieved through engagement of the locking structure and the engaging structure in the circumferential direction. At the same time, the locking structure and the engaging structure do not affect the movement of the first anti-rotation structure 441 along the axial direction Z.

The first locking portion 4411 is formed on the outer peripheral side surface of the first anti-rotation structure 441, and the first locking portion 4411 is configured to engage with the second locking portion on the inner wall surface of the lock sleeve 410 in the circumferential direction, and thus the first anti-rotation structure 441 is restricted from rotating, so that the rotation of the rotary knob section 422 is also restricted.

Optionally, the first locking portion 4411 may be but is not limited to a gear structure, a convex surface, a protrusion structure, or the like, protruding from the outer peripheral side surface of the first anti-rotation structure 441. In an example, the first anti-rotation structure 441 may be a gear structure, a prismatic structure, or the like, and the outer gears of the gear structure or the peripheral side surface of the prismatic structure is the first locking portion 4411 of the first anti-rotation structure 441.

The second locking portion is formed on the inner wall surface of the lock sleeve 410, and the second locking portion is configured to engage with the first locking portion 4411 of the first anti-rotation structure 441 in the circumferential direction, so that the first anti-rotation structure 441 cannot rotate relative to the lock sleeve 410 in the engaged state.

Optionally, the second locking portion may be but is not limited to a gear structure, a convex surface, a protrusion structure, or the like, protruding from the inner side wall surface of the lock sleeve 410. In an example, the inner side wall surface of the lock sleeve 410 may form an internal gear structure, or the cross-section of the inner side wall of the lock sleeve 410 may be a polygonal structure, or the like.

The first anti-rotation structure 441 is capable of moving along the axial direction Z, so that the first locking portion 4411 and the second locking portion form an overlapping portion in the axial direction Z, at this time, the first locking portion 4411 and the second locking portion are engaged, and the first anti-rotation structure 441 cannot rotate about the axis of the rotary knob section 422.

With such an arrangement, the first locking portion 4411 formed on the outer peripheral side surface of the first anti-rotation structure 441 is engaged with the second locking portion formed on the inner wall surface of the lock sleeve 410 in the circumferential direction, so that the first anti-rotation structure 441 cannot rotate about the axis of the rotary knob section 422 relative to the lock sleeve 410. Moreover, since relative rotation between the first anti-rotation structure 441 and the rotary knob section 422 is also restricted, the rotary knob section 422 is locked and cannot rotate about the axis when the first locking portion 4411 and the second locking portion are engaged. In addition, the first anti-rotation structure 441 is capable of moving along the axial direction Z to disengage the first locking portion 4411 from the second locking portion, thereby enabling continued operation of the rotary knob section 422 to cause relative rotation between the first threaded section 421 and the second threaded section 431, and further enabling the connecting section 432 to move along the axial direction Z and achieve the purpose of locking or unlocking.

Referring to FIG. 3, FIG. 4, FIG. 6, and FIG. 7, in some embodiments, the anti-rotation assembly 440 includes a first anti-rotation structure 441 and a second anti-rotation structure 442, where the first anti-rotation structure 441 is disposed on the rotary knob section 422 and is configured to restrict relative rotation with the rotary knob section 422, the second anti-rotation structure 442 is connected to the lock sleeve 410, a first locking portion 4411 is formed on the outer peripheral side surface of the first anti-rotation structure 441, a through hole 4421 for the rotary knob section 422 to penetrate through is provided on the second anti-rotation structure 442, a third locking portion 4422 is formed on the inner wall of the through hole 4421, the first locking portion 4411 and the third locking portion 4422 are engaged in the circumferential direction, and the first anti-rotation structure 441 is capable of moving along the axial direction Z to disengage the third locking portion 4422 from the first locking portion 4411.

The first anti-rotation structure 441 in this embodiment is completely the same as the first anti-rotation structure 441 in the above embodiment, and the first anti-rotation structure 441 is not be repeated in this embodiment.

The second anti-rotation structure 442 is connected to the lock sleeve 410. Optionally, the second anti-rotation structure 442 may be fixed to the end of the lock sleeve 410 where the rotary knob section 422 is located through fasteners, welding, snap-fitting, or the like; or, the second anti-rotation structure 442 may also be fixed in the cavity 411 of the lock sleeve 410 through fasteners, welding, snap-fitting, or the like.

The second anti-rotation structure 442 includes but is not limited to a sleeve structure, a circular ring structure, an arc segment structure, or the like.

The third locking portion 4422 is formed on an inner wall surface of the second anti-rotation structure 442, and the third locking portion 4422 is configured to engage with the first locking portion 4411 of the first anti-rotation structure 441 in the circumferential direction, so that the first anti-rotation structure 441 cannot rotate relative to the second anti-rotation structure 442 in the engaged state, that is, cannot rotate relative to the lock sleeve 410.

Optionally, the third locking portion 4422 may be but is not limited to a gear structure, a convex surface, a protrusion structure, or the like, protruding from the inner side wall surface of the second anti-rotation structure 442. In an example, the inner side wall surface of the second anti-rotation structure 442 may form a gear structure, or the inner side wall and cross-section of the second anti-rotation structure 442 may be a polygonal structure, or the like.

The first anti-rotation structure 441 is capable of moving along the axial direction Z, so that the first locking portion 4411 and the third locking portion 4422 form an overlapping portion in the axial direction Z, at this time, the first locking portion 4411 and the third locking portion 4422 are engaged, and the first anti-rotation structure 441 cannot rotate about the axis of the rotary knob section 422, so that the rotary knob section 422 cannot rotate either.

With such an arrangement, the first locking portion 4411 formed on the outer peripheral side surface of the first anti-rotation structure 441 is engaged with the third locking portion 4422 formed on the inner wall surface of the second anti-rotation structure 442 in the circumferential direction, so that the first anti-rotation structure 441 cannot rotate about the axis relative to the second anti-rotation structure 442. Moreover, since relative rotation between the first anti-rotation structure 441 and the rotary knob section 422 is also restricted, the rotary knob section 422 is locked and cannot rotate about the axis when the first locking portion 4411 and the third locking portion 4422 are engaged. In addition, the first anti-rotation structure 441 is capable of moving along the axial direction Z to disengage the first locking portion 4411 from the third locking portion 4422, thereby enabling continued operation of the rotary knob section 422 to cause relative rotation between the first threaded section 421 and the second threaded section 431, and further enabling the connecting section 432 to move along the axial direction Z and achieve the purpose of locking or unlocking.

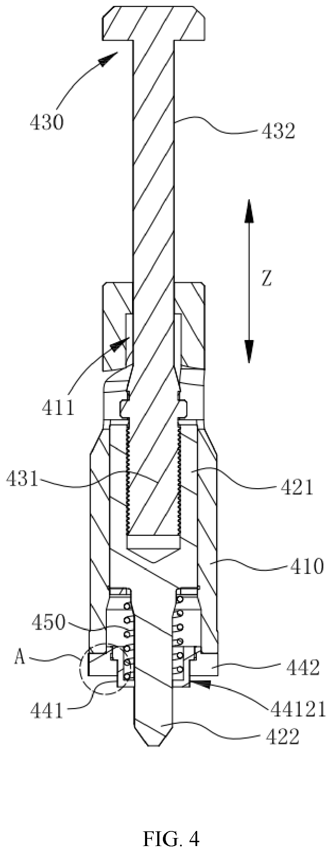

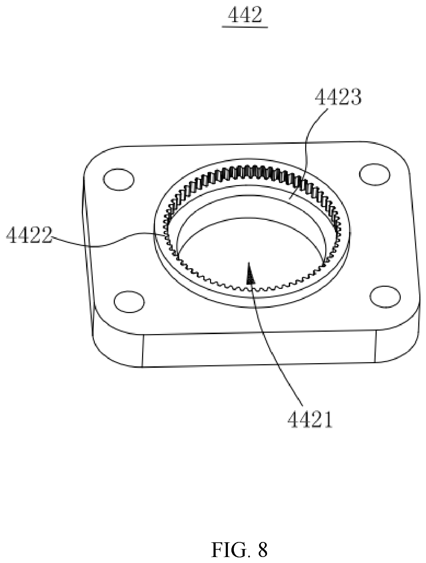

Referring to FIG. 4, and FIG. 6 to FIG. 8, in some embodiments, a protrusion portion 4423 is also formed on the inner wall of the through hole 4421, the protrusion portion 4423 is disposed on a side of the third locking portion 4422 facing away from the first threaded section 421, and the protrusion portion 4423 is configured to restrict the movement of the first locking portion 4411 along the axial direction Z.

The protrusion portion 4423 is configured to restrict the movement of the first locking portion 4411 along the axial direction Z, that is, the movement of the first anti-rotation structure 441 along the axial direction Z is restricted.

Optionally, the protrusion portion 4423 may be a protrusion structure, an arc segment structure, a convex ring structure, or the like, arranged on a side of the third locking portion 4422 facing away from the first threaded section 421.

The protrusion portion 4423 is disposed on a side of the third locking portion 4422 facing away from the first threaded section 421, and thus when the first anti-rotation structure 441 moves along the axial direction Z and toward the outside of the lock sleeve 410 on the side facing away from the first threaded section 421, and the first anti-rotation structure 441 and the first locking portion 4411 move to abut against the protrusion portion 4423, so that the protrusion portion 4423 can restrict the first anti-rotation structure 441 from continuing to move outside the lock sleeve 410, effectively reducing the probability of excessive movement of the first anti-rotation structure 441. At the same time, when the first anti-rotation structure 441 abuts against the protrusion portion 4423, the first locking portion 4411 can maintain the engaged state with the third locking portion 4422. Thus, when the lock sleeve 410 is placed with the side facing the rotary knob section 422 toward the downward direction of gravity, the first anti-rotation structure 441 can maintain abutting against the protrusion portion 4423 according to the action of gravity, so that the first locking portion 4411 can maintain the engaged state with the third locking portion 4422 and form locking.

With such an arrangement, the protrusion portion 4423 can be used to limit the movement of the first locking portion 4411 along the axial direction Z, thereby restricting the movement of the first anti-rotation structure 441 between the first threaded section 421 and the protrusion portion 4423, reducing the probability of falling off due to excessive movement.

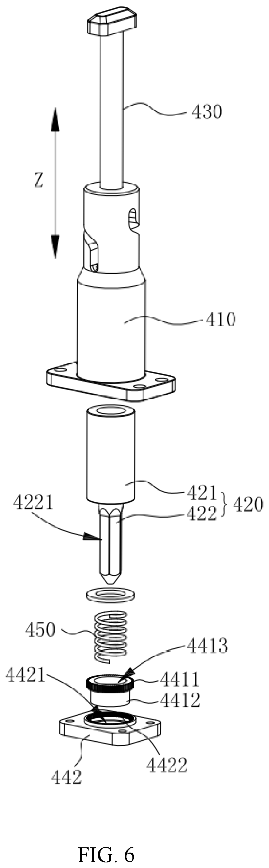

Referring to FIG. 4 and FIG. 6, in some embodiments, the quick-change lock assembly 400 further includes an elastic reset member 450, where two opposite ends of the elastic reset member 450 respectively abut against the first threaded section 421 and the first anti-rotation structure 441.

The elastic reset member 450 is configured to achieve elastic reset; optionally, the elastic reset member 450 includes but is not limited to elastic structural members such as a spring, an elastic block, or the like. In an example, in some specific implementations, the elastic reset member 450 may adopt a spring, the first threaded section 421 is a cylindrical structure with an internal thread, and thus one end of the spring abuts against an end of the cylindrical structure of the first threaded section 421, and the other end of the spring abuts against an end of the first anti-rotation structure 441.

With such an arrangement, when the first anti-rotation structure 441 has a tendency to move toward the first threaded section 421 and disengage from the second anti-rotation structure 442 due to vibration or other conditions, the elastic reset member 450 can apply a force to the first anti-rotation structure 441 to reduce the probability of accidental disengagement of the first anti-rotation structure 441 from the second anti-rotation structure 442, maintaining the engagement state of the first locking portion 4411 and the third locking portion 4422, thereby improving the stability of the quick-change lock assembly 400.

Referring to FIG. 6 to FIG. 8, in some embodiments, a boss portion 4412 is formed on one side of the first anti-rotation structure 441 in the axial direction Z, the protrusion portion 4423 is in an annular structure, and the boss portion 4412 penetrates through the protrusion portion 4423 and extends outside of the lock sleeve 410.

With such an arrangement, by penetrating the boss portion 4412 through the annular protrusion portion 4423 and extending outside of the lock sleeve 410, when an unlocking operation is required, the boss portion 4412 extending to the outside can be more easily operated, and the boss portion 4412 is pushed into the lock sleeve 410 to move the first anti-rotation structure 441 toward the direction of the first threaded section 421, thereby disengaging the first locking portion 4411 of the first anti-rotation structure 441 from the third locking portion 4422 of the second anti-rotation structure 442 to achieve the purpose of unlocking.

Referring to FIG. 4 to FIG. 7, in some embodiments, the second anti-rotation structure 442 is fixed to an end of the lock sleeve 410 where the rotary knob section 422 is located, in the locked state of the first locking portion 4411 and the third locking portion 4422, the boss portion 4412 extends outside the second anti-rotation structure 442 and forms an unlocking section 44121, and in the axial direction Z, the height X of the unlocking section 44121 is greater than or equal to the height Y of the overlap of the first locking portion 4411 and the third locking portion 4422 in the locked state.

It can be understood that the unlocking section 44121 refers to a segment structure of the boss portion 4412, in the locked state of the first locking portion 4411 and the third locking portion 4422, the portion of the boss portion 4412 penetrating through the protrusion portion 4423 and extending outside of the second anti-rotation structure 442 is the unlocking section 44121.

With such an arrangement, the height X of the unlocking section 44121 is set to be greater than or equal to the height Y of the overlap of the first locking portion 4411 and the third locking portion 4422 in the locked state, thus during unlocking of the first locking portion 4411 from the third locking portion 4422, it is only necessary to push the unlocking section 44121 outside the second anti-rotation structure 442 toward the inside of the second anti-rotation structure 442 until an end of the unlocking section 44121 is pushed flush with an end of the second anti-rotation structure 442 to achieve disengagement and unlocking of the first locking portion 4411 from the third locking portion 4422, without pushing the unlocking section 44121 into the second anti-rotation structure 442, effectively improving the convenience of the unlocking operation.

Referring to FIG. 3 and FIG. 4, in some embodiments, the boss portion 4412 and the protrusion portion 4423 are in sliding engagement.

With such an arrangement, by setting the boss portion 4412 and the protrusion portion 4423 in sliding engagement, during the pushing and unlocking process of the unlocking section 44121 of the first anti-rotation structure 441, the boss portion 4412 can slide relative to the inner wall surface of the protrusion portion 4423, thereby making the pushing operation of the unlocking section 44121 easier.

Referring to FIG. 3, FIG. 6 to FIG. 8, in some embodiments, the first locking portion 4411 and the third locking portion 4422 are both gear structures, the gear of the first locking portion 4411 forms a chamfer (not shown in the figure) at an outer edge facing the third locking portion 4422, and/or, the gear of the third locking portion 4422 forms a chamfer (not shown in the figure) at an outer edge facing the first locking portion 4411.

The gear of the first locking portion 4411 forms a chamfer at the outer edge facing the third locking portion 4422, so that in the case where the first locking portion 4411 and the third locking portion 4422 are disengaged, the first locking portion 4411 needs to be moved to re-engage with the third locking portion 4422, the chamfer formed on the first locking portion 4411 can guide in the insertion of the third locking portion 4422, thereby improving the success rate of engagement between the first locking portion 4411 and the third locking portion 4422.

It can be understood that a chamfer may also be formed on the gear of the third locking portion 4422 at the outer edge facing the first locking portion 4411; or, a chamfer is formed on the gear of the first locking portion 4411 at the outer edge facing the third locking portion 4422, and at the same time, a chamfer is also formed on the gear of the third locking portion 4422 at the outer edge facing the first locking portion 4411, so as to improve the success rate of engagement between the first locking portion 4411 and the third locking portion 4422.

With such an arrangement, by providing a chamfer on the gear of the first locking portion 4411, and/or, providing a chamfer on the gear of the third locking portion 4422, when the first locking portion 4411 is disengaged from the third locking portion 4422, the process of re-engagement between the first locking portion 4411 and the third locking portion 4422 is easier, thereby making the locking and unlocking operations of the quick-change lock assembly 400 smoother.

Referring to FIG. 6 to FIG. 8, in some embodiments, a fourth locking portion 4221 is formed on an outer peripheral side surface of the rotary knob section 422, the first anti-rotation structure 441 is provided with a mounting hole 4413, a fifth locking portion 4414 is formed on an inner side wall surface of the mounting hole 4413, the fourth locking portion 4221 and the fifth locking portion 4414 are engaged in the circumferential direction, and the fourth locking portion 4221 and the fifth locking portion 4414 are in sliding engagement in the axial direction Z.

The fourth locking portion 4221 is configured to engage with the fifth locking portion 4414 in the circumferential direction, and the fourth locking portion 4221 and the fifth locking portion 4414 are in sliding engagement in the axial direction Z. Optionally, the fourth locking portion 4221 may be but is not limited to a gear structure, a convex surface, a protrusion structure, or the like, protruding from the outer peripheral side surface of the rotary knob section 422. In an example, the rotary knob section 422 may be a gear structure, a prismatic structure, or the like, and the outer gears of the gear structure or the peripheral side surface of the prismatic structure is the fourth locking portion 4221 of the rotary knob section 422.

The fifth locking portion 4414 may be but is not limited to a gear structure, a convex surface, a protrusion structure, or the like, protruding from the inner wall of the hole of the mounting hole 4413. In an example, the inner wall of the hole of the mounting hole 4413 may form a gear structure, or the cross-section of the inner wall of the hole of the mounting hole 4413 may be a polygonal structure, or the like.

In an example, in some specific implementations, the rotary knob section 422 may be a hexagonal prism structure, and the rotary knob section 422 extends outside of the lock sleeve 410, the cross-section of the inner wall of the hole of the mounting hole 4413 may be a regular hexagonal structure, and thus the rotary knob section 422 may penetrate through the mounting hole 4413 of the first anti-rotation structure 441 and extend outside of the lock sleeve 410, the peripheral side surface of the first anti-rotation structure 441 engages with the inner wall of the hole of the mounting hole 4413 in the circumferential direction, and the first anti-rotation structure 441 can only rotate synchronously with the rotary knob section 422 and cannot rotate relative to the rotary knob section 422. When unlocking is needed, only an external tool with a hexagonal hole is used to raise the first anti-rotation structure 441 outside the lock sleeve 410 to disengage the first locking portion 4411 from the third locking portion 4422, and the rotary knob section 422 penetrates through the hexagonal hole, then the external tool is rotate so as to drive the rotary knob section 422 to rotate, so that the first threaded section 421 drives the second threaded section 431 and the connecting section 432 to move along the axial direction Z and achieve unlocking.

The following describes the quick-change lock assembly 400 of the present application in combination with specific implementations.

Referring to FIG. 1 to FIG. 8, in this implementation, the quick-change lock assembly 400 includes a lock sleeve 410, a rotary knob member 420, a locking member 430, and an anti-rotation assembly 440. The lock sleeve 410 is in a columnar structure with a hollow cavity 411, and the cavity has an axial direction Z. The rotary knob member 420 includes a first threaded section 421 and a rotary knob section 422 formed along an axial direction Z, where the first threaded section 421 may be a cylindrical structure with a threaded hole, the rotary knob section 422 may be a hexagonal prism structure, the rotary knob section 422 may drive the first threaded section 421 to rotate synchronously about the axis, the first threaded section 421 is accommodated in the cavity 411, and the rotary knob section 422 partially extends out of the cavity 411.

The locking member 430 includes a second threaded section 431 and a connecting section 432 formed along the axial direction Z, the second threaded section 431 may be a rod-like structure with external threads, and the second threaded section 431 may be screwed into the threaded hole of the first threaded section 421, the second threaded section 431 is accommodated in the cavity 411, the connecting section 432 is partially connected to the second threaded section 431, and the other part of the connecting section 432 extends out of the cavity 411 and is configured to be locked onto the lock base. In an example, the locking member 430 may be in a T-shaped screw structure. The second threaded section 431 is limitedly disposed in the cavity 411 and can move along the axial direction Z, that is, the axial rotation movement of the second threaded section 431 is restricted. In this implementation, the specific manner in which the second threaded section 431 is limitedly disposed in the cavity 411 may be as follows: a guide pin is provided on the portion of the second threaded section 431 or the connecting section 432 located in the cavity 411, at the same time, a guide hole is provided on the lock sleeve 410, and the guide pin is inserted into the guide hole. Thus, when the rotary knob section 422 drives the first threaded section 421 to rotate, the rotation of the second threaded section 431 is restricted, and the second threaded section 431 and the connecting section 432 move along the axial direction Z, so that the locking member 430 of the T-shaped screw structure can use the head of the T-shaped screw structure and the end of the lock sleeve 410 to clamp and fix the battery and the lock base of the vehicle.

The anti-rotation mechanism includes a first anti-rotation structure 441 and a second anti-rotation structure 442, where the first anti-rotation structure 441 is provided with a mounting hole 4413, the cross-section of the inner wall of the hole of the mounting hole 4413 is regular hexagonal, a first locking portion 4411 is formed on the outer peripheral side surface of the first anti-rotation structure 441, and the first locking portion 4411 may specifically be a gear structure formed on the outer peripheral side surface of the first anti-rotation structure 441. In this way, the rotary knob section 422 may penetrate through the mounting hole 4413 of the first anti-rotation structure 441, and the rotary knob section 422 and the second anti-rotation structure 442 cannot form relative rotation in the circumferential direction.

The second anti-rotation structure 442 is fixed to the end of the lock sleeve 410 where the rotary knob section 422 is located through fasteners, a through hole 4421 for the rotary knob section 422 to extend outside of the lock sleeve 410 is provided on the second anti-rotation structure 442, a third locking portion 4422 and an annular protrusion portion 4423 are formed on the inner wall of the through hole 4421, the third locking portion 4422 may specifically be a gear structure engaged with the first locking portion 4411, and the protrusion portion 4423 is formed on a side of the third locking portion 4422 facing away from the first threaded section 421.

At the same time, a boss portion 4412 is also formed on one side of the first anti-rotation structure 441 in the axial direction Z, the boss portion 4412 may penetrate through the protrusion portion 4423 and extend outside of the lock sleeve 410 and the second anti-rotation structure 442, and in the locked state of the first locking portion 4411 and the third locking portion 4422, the boss portion 4412 extends outside of the second anti-rotation structure 442 and forms an unlocking section 44121, in the axial direction Z, the height X of the unlocking section 44121 is greater than or equal to the height Y of the overlap of the first locking portion 4411 and the third locking portion 4422 in the locked state.

An elastic reset member 450, such as a spring, is also disposed in the cavity 411 of the lock sleeve 410, the spring may be sleeved on the rotary knob section 422, one end of the spring abuts against the first threaded section 421, and the other end of the spring abuts against the first anti-rotation structure 441 and applies a force to the first anti-rotation structure 441, to reduce the probability of the first anti-rotation structure 441 jumping along the axial direction Z and accidentally unlocking from the second anti-rotation structure 442 in the case of vibration.

When the quick-change lock assembly 400 is operated, an external tool with a hexagonal hole may be used, the external tool is aligned to the external tool with the rotary knob section 422 to enable the rotary knob section 422 to penetrate through the hexagonal hole, then the external tool continues to move toward the lock sleeve 410 along the axial direction Z, so that the external tool can push the boss portion 4412. However, when the external tool moves to abut against the end surface of the second anti-rotation structure 442, the boss portion 4412 is completely pushed into the hole of the protrusion portion 4423, at this time, the first anti-rotation structure 441 and the second anti-rotation structure 442 are unlocked, then rotating the external tool can drive the rotary knob section 422 to rotate, thereby enabling the first threaded section 421 to rotate relative to the second threaded section 431, and further enabling the second threaded section 431 and the connecting section 432 to move along the axial direction Z, so that the connecting section 432 changes the relative position with the lock base, achieving the purpose of locking or unlocking.

Referring to FIG. 1 to FIG. 3, according to a second aspect, an embodiment of the present application provides a battery 100, including a box 10 and the quick-change lock assembly 400 as described above, where the quick-change lock assembly 400 is arranged on the box 10, and the quick-change lock assembly 400 is configured to mount the box 10 to a vehicle 1000.

The battery 100 provided by the embodiments of the present application includes the quick-change lock assembly 400 as described above. On the basis that the locked state of the quick-change lock assembly 400 as described above is more stable, the stability of the battery 100 during fixed assembly is better.

Referring to FIG. 1 to FIG. 3, according to a third aspect, an embodiment of the present application provides a vehicle 1000, including a vehicle body, a battery 100, and the quick-change lock assembly 400 as described above, where the quick-change lock assembly 400 is configured to lock the battery 100 onto the vehicle body.

The vehicle 1000 provided by the embodiments of the present application includes the quick-change lock assembly 400 as described above. On the basis that the locked state of the quick-change lock assembly 400 as described above is more stable, the stability of the battery fixed to the vehicle body through the quick-change lock assembly 400 is better.

The foregoing descriptions are merely preferred embodiments of the present application which are not intended to limit the present application. Any modifications, equivalent replacements, and improvements made without departing from the spirit and principle of the present application shall fall within the protection scope of the present application.

## Claims

1. A quick-change lock assembly, configured to be locked onto a lock base, **characterized by** comprising
a lock sleeve, having a hollow cavity formed therein, and the cavity having an axial direction;
a rotary knob member, comprising a first threaded section and a rotary knob section formed along the axial direction, wherein the first threaded section is disposed in the cavity, and the first threaded section is configured to be rotatable about the axis;
a locking member, comprising a connecting section and a second threaded section formed along the axial direction, wherein the second threaded section is limitedly disposed in the cavity and threadedly engaged with the first threaded section, the second threaded section is configured to be movable along the axial direction, and the connecting section extends out of the cavity and is used for locking engagement with the lock base; and
an anti-rotation assembly, wherein the anti-rotation assembly is configured to be locked onto the rotary knob section to restrict rotation of the first threaded section, so as to maintain the second threaded section and the connecting section in a state locked onto the lock base; or, the anti-rotation assembly is configured to release the locking of the rotary knob section, so that the first threaded section is capable of rotating relative to the second threaded section, and the second threaded section and the connecting section are capable of moving axially outward from the cavity to release the locking of the lock base.

2. The quick-change lock assembly according to claim 1, **characterized in that** the anti-rotation assembly comprises a first anti-rotation structure, wherein the first anti-rotation structure is disposed on the rotary knob section and is configured to restrict relative rotation with the rotary knob section, a first locking portion is formed on an outer peripheral side surface of the first anti-rotation structure, a second locking portion is formed on an inner wall surface of the lock sleeve, the first locking portion and the second locking portion are engaged in a circumferential direction, and the first anti-rotation structure is capable of moving along the axial direction to disengage the first locking portion from the second locking portion.

3. The quick-change lock assembly according to claim 1, **characterized in that** the anti-rotation assembly comprises a first anti-rotation structure and a second anti-rotation structure, wherein the first anti-rotation structure is disposed on the rotary knob section and is configured to restrict relative rotation with the rotary knob section, the second anti-rotation structure is connected to the lock sleeve, a first locking portion is formed on the outer peripheral side surface of the first anti-rotation structure, a through hole for the rotary knob section to penetrate through is provided on the second anti-rotation structure, a third locking portion is formed on an inner wall of the through hole, the first locking portion and the third locking portion are engaged in the circumferential direction, and the first anti-rotation structure is capable of moving along the axial direction to disengage the third locking portion from the first locking portion.

4. The quick-change lock assembly according to claim 3, **characterized in that** a protrusion portion is also formed on the inner wall of the through hole, the protrusion portion is disposed on a side of the third locking portion facing away from the first threaded section, and the protrusion portion is configured to restrict the movement of the first locking portion along the axial direction.

5. The quick-change lock assembly according to claim 4, **characterized by** further comprising an elastic reset member, wherein two opposite ends of the elastic reset member respectively abut against the first threaded section and the first anti-rotation structure.

6. The quick-change lock assembly according to claim 5, **characterized in that** a boss portion is formed on one side of the first anti-rotation structure in the axial direction, the protrusion portion is in an annular structure, and the boss portion penetrates through the protrusion portion and extends outside of the lock sleeve.

7. The quick-change lock assembly according to claim 6, **characterized in that** the second anti-rotation structure is fixed to an end of the lock sleeve where the rotary knob section is located, in the locked state of the first locking portion and the third locking portion, the boss portion extends outside the second anti-rotation structure and forms an unlocking section; and along the axial direction, the height of the unlocking section is greater than or equal to the height of the overlap of the first locking portion and the third locking portion in the locked state.

8. The quick-change lock assembly according to claim 6, **characterized in that** the boss portion and the protrusion portion are in sliding engagement.

9. The quick-change lock assembly according to claim 3, **characterized in that** the first locking portion and the third locking portion are both gear structures, the gear of the first locking portion forms a chamfer at an outer edge facing the third locking portion, and/or, the gear of the third locking portion forms a chamfer at an outer edge facing the first locking portion.

10. The quick-change lock assembly according to any one of claims 2 to 9, **characterized in that** a fourth locking portion is formed on an outer peripheral side surface of the rotary knob section, the first anti-rotation structure is provided with a mounting hole, a fifth locking portion is formed on an inner side wall surface of the mounting hole, the fourth locking portion and the fifth locking portion are engaged in the circumferential direction, and the fourth locking portion and the fifth locking portion are in sliding engagement in the axial direction.

11. A battery, **characterized by** comprising a box and the quick-change lock assembly according to any one of claims 1 to 10, wherein the quick-change lock assembly is disposed on the box, and the quick-change lock assembly is configured to mount the box to a vehicle.

12. A vehicle, **characterized by** comprising a vehicle body, a battery, and the quick-change lock assembly according to any one of claims 1 to 10, wherein the quick-change lock assembly is configured to lock the battery onto the vehicle body.
